# EUROPEAN PATENT APPLICATION

(11) **EP 0 886 201 A1**
(43) Date of publication of application: **23.12.1998**
(21) Application number: 98830359.0
(22) Date of filing: 11.06.1998
(51) Int. Cl.: G05G 1/06

(54) **Knob for the gear shift lever of auto vehicles**

(30) Priority: 18.06.1997 IT BO970373
(71) Applicant: STUDIO FUTURO S.r.l., 48022 Lugo (Ravenna) (IT)
(72) Inventor: Gillabert, Rajmond André, 48011 Lugo Ra (IT)
(74) Representative: Lanzoni, Luciano

(57) **Abstract**

The present invention relates to a knob for the gear shift lever of auto vehicles, comprising a universal grip (1) threaded internally and a hollow adapter (2), threaded externally in a manner complementary to the grip (1).

## Description

The present invention relates to a knob for the gear shift lever of auto vehicles.

Currently, in the car sector, two types of knobs for the gear shift lever are in widespread use: a first type, suitable for the traditional gear shift, and a second type, for the so-called "syringe" gear shift.

The knob for the traditional gear shift, of the average length of about ten centimetres, is coupled directly onto the head of the gear shift lever; the one for the "syringe" gear shift, instead, is of much smaller size (about six centimetres) and, in addition to being fastened to the head of the gear shift lever, it must allow vertical sliding by the "syringe", whose shape mandates that the knob presents in its lower part a notch complementary to the dimensions of the upper part of the "syringe".

In both cases, the knob can be fastened essentially in two ways, one alternative to the other.

If the head of the gear shift lever is threaded, the knob shall present a complementary counter-thread: it is then obvious that its dimensions are to be adapted on a case by case basis to those of the lever, making it impossible to design a universal knob.

If the head of the gear shift lever is smooth or knurled, and in any case not threaded, then the knob is fastened by gluing or by forced coupling against the lever. In the latter case, in the lateral surface of the knob is drilled at least one through hole into which a screw is inserted, to be forced against the head of the lever.

If the knob is glued, in addition to the problem deriving from the impossibility of constructing a universal one, there is the unknown factor related to the holding strength of the glue: what is more, even in the best case, it would be rather difficult to replace the piece.

If instead the knob is forced, the holes that need to be drilled are an aesthetically questionable choice and they give the impression that the knob was applied in a so-called post-mounting phase, subsequent to the original construction of the auto vehicle. Moreover, even with an additional piece, they can be covered only in the case of traditional gear shifts.

The object of the present invention therefore is to eliminate the aforementioned drawbacks. The invention, as it is characterised by the claims, solves the problem of providing a universal knob for the gear shift lever of auto vehicles without holes on its surface.

One of the advantages obtained by means of the present invention consists essentially ofthe fact that it can be associated both to traditional and to "syringe" gear shift levers of any size currently in use. Moreover, it can suit both threaded and smooth or knurled levers and it is aesthetically homogeneous with the lever as a whole, though it is extremely easy to remove it in order to replace it, should the need arise. The invention is described more in detail hereafter with the aid of the drawings which show an embodiment provided purely by way of non limiting example, wherein:
- Figure 1 shows the invention installed, with some parts removed the better to highlight others;
- Figure 2 shows an exploded front view of the invention;
- Figure 3 shows the invention according to section III-III in Figure 2.

As the figures show, the present invention relates to a knob for the gear shift lever of auto vehicles: it comprises a universal grip (1) threaded internally and a hollow adapter (2), threaded externally in a manner complementary to the grip (1). It is obviously understood that they must be able to be screwed together, but the threaded parts may also have different lengths.

In the figures, the adapter (2) has been shown with an enlargement (2b) at the base of a threaded part (2a): the presence of the former is not, however, necessary and the embodiment deriving therefrom does not depart from the scope of the present patent.

In order for the knob (10) to be adaptable to gear shift levers (5) of any size, it is sufficient for it to present an internal cavity (7) able to house the gear shift lever (5) of maximum size. Since such a lever can have a cross section of different shapes, also the cavity (7) of the adapter (2), here shown as circular, may have different shapes.

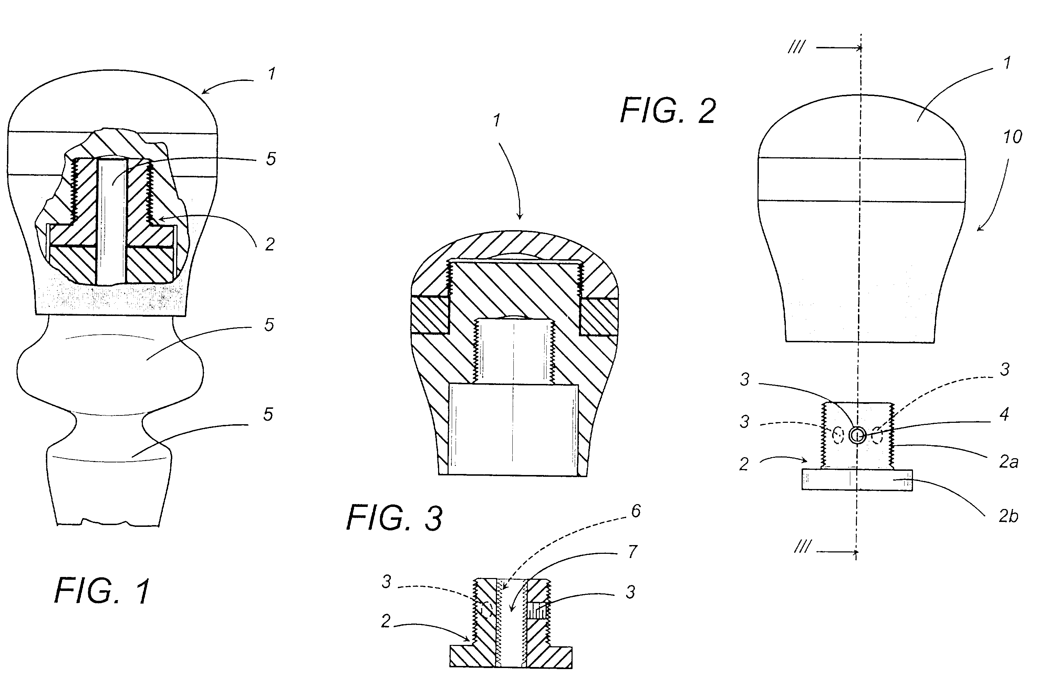

Should the gear shift lever (5) be smooth or knurled, the adapter (2) presents on its own lateral surface at least one through hole (3) able to house fastening means (4) to the aforesaid lever (5). The optimal solution, shown in Figure 2, provides for three through holes (3) distributed circumferentially to obtain a centred fastening to the gear shift lever (5). As fastening means, socket head screws (4) have been shown, which are forced against its surface. For particular types of cars, the holes (3) and the related screws (4) can also be aligned vertically.

If instead the gear shift lever (5) presents its own end threaded, then the adapter (2) presents an inner thread (6) complementary to that of the gear shift lever (5).

The invention thus conceived can be subject to numerous modifications and variations without thereby departing from the scope of the inventive concept. Moreover, all components can be replaced with technically equivalent elements.

In practice, modifications and/or improvements are obviously possible without thereby departing from the scope of the claims that follow.

## Claims

1. Knob for the gear shift lever of auto vehicles, characterised in that it comprises a universal grip (1) internally threaded and a hollow adapter (2), threaded externally in a way complementary to the grip (1).

2. Knob according to claim 1, characterised in that the adapter (2) presents on its lateral surface at least one through hole (3) able to house means (4) for fastening to the gear shift lever (5).

3. Knob according to claim 1, characterised in that the adapter (2) presents an internal thread (6) complementary to that of the gear shift lever (5).

4. Knob according to claim 1 or 2 or 3, characterised in that the adapter (2) presents a cavity (7) able to house the gear shift lever (5) of maximum size.

5. Knob according to claim 2 or 4, characterised in that the adapter (2) presents on its lateral surface three through holes (3) for centred fastening to the gear shift lever (5).

6. Knob according to claim 2 or 4 or 5, characterised in that the fastening means comprise at least one socket head screw (4) to be forced against the gear shift lever (5).
